Europäisches Patentamt

European Patent Office

Office européen des brevets

(19)

(11) Publication number: **0 166 040**
**A1**

## EUROPEAN PATENT APPLICATION

(12)

(21) Application number: **84304258.1**

(22) Date of filing: **22.06.84**

(51) Int. Cl.⁴: **A 01 G 1/04**

(43) Date of publication of application: **02.01.86**
Bulletin 86/1

(84) Designated Contracting States: **AT BE CH DE FR GB IT LI LU NL SE**

(71) Applicant: **Fujimoto, Suiseki, 447, Oaza Oyanagi Miyakemachi, Shiki-gun Nara-ken (JP)**

(72) Inventor: **Fujimoto, Tahei, 447, Oaza Oyanagi Miyakemachi, Shiki-gun Nara-ken (JP)**

(74) Representative: **Pennant, Pyers et al, Stevens, Hewlett & Perkins 5 Quality Court Chancery Lane, London, WC2A 1HZ (GB)**

(54) Method of inoculating mushroom basidiospores, seed basidiospore bed for inoculation, culture container for seed basidiospore bed and boring apparatus for host wood for inoculation.

(57) A method of inoculating basidospores of mushrooms (particularly Lentinus edodes) involves making a saw cut in the host wood to form a recess (1) and inserting therein a flat, half-moon shaped seed basidospore bed (2) in a manner so as to fill the recess.

A seed basidospore bed for inoculation is made by incubation of the seed basidospore on a flat, half-moon shaped piece of wood designed to conform to the shape of the host wood.

A culture container (A) comprises a capped two-part bottle-like body suitable for incubation of seed basidospores and designed for compact storage.

A boring apparatus for the host wood to be inoculated is designed to make many transverse cuts in the host wood efficiently by the use of plural circular saws (22) applied from various directions.

EP 0 166 040 A1

0166040

METHOD OF INOCULATING MUSHROOM BASIDIOSPORES,
SEED BASIDIOSPORE BED FOR INOCULATION, CULTURE
CONTAINER FOR SEED BASIDIOSPORE BED AND BORING
APPARATUS FOR HOST WOOD FOR INOCULATION

The present invention relates to a method of inoculating mushroom basidiospores, a seed basidiospore bed for inoculation, a culture container for the seed basidiospore bed and a boring apparatus for host wood to be inoculated.

In order to artificially cultivate mushrooms, especially Lentinus edodes for edible use, a trunk of a suitable broad-leaved tree (for example oak, maple or birch) is cut into a suitable length to make a host wood for inoculation with basidiospores. The outer circumferential surfaces of the host wood are bored to make inoculation recesses, into which seed basidiospore beds obtained by pure culture of the seed basidiospores inoculated on pieces of wood are set, and cultivation proceeds.

Conventional methods for inoculating mushroom basidiospores include a method of inserting a wedge shaped seed basidiospore bed into a planting space provided by cutting a host wood with a chisel, and a method of stuffing a sawdust culture of basidiospore or a rod shaped seed basidiospore bed into a round hole made in the host wood by an electric drill. These methods have been widely practiced.

The disadvantages of the above conventional methods are that the need to provide a sufficient number of planting holes in the host wood to obtain a high planting density, so as to allow the spawn after inoculation to rapidly spread into the host wood, results in a considerable amount of time and labour being spent inoculating the seed basidiospores in each planting hole.

The present inventors particularly noticed the fact that the hypha, after inoculation on the host wood for the purpose of the cultivation of mushrooms, multiplied at a rate several scores of times faster in the lengthwise direction of the wood than in the width-wise direction of the wood.

It is an object of the present invention to provide a new seed basidiospore inoculation method in which, by making a cut with a saw in the surface of the host wood to be inoculated to a suitable depth in a transverse direction of said wood so as to form a cutout recess along the outer circumferential surface of the host wood, and by fitting a flat half-moon shaped seed basidiospore bed in a manner so as to block this inoculation recess, it is possible for the spawn to develop quickly from the inoculated seed basidiospore bed and rapidly spread into the host wood over a broad area, thus making it possible to use a low density of inoculation and thereby increasing the efficiency of inoculation work, shortening the crop time and increasing the yield, and also suppressing the growth of various bacteria.

Another object of the present invention is to provide a seed basidiospore bed for inoculation suitable for use in this new inoculation method and a culture container for the seed basidiospore bed suitable for the culture and inoculation of this seed basidiospore bed.

A further object of the present invention is to provide a boring apparatus for the host wood to be inoculated which involves mechanization of the process of formation of the inoculation slot or recess to be provided on the host wood so as to make it possible to carry out boring work in a short time.

Referring to the accompanying drawings:

Figure 1 is a view showing the conditions of multiplication and propagation of mushroom spawn in the host wood according to conventional methods;

Figure 2 is a view showing the conditions of multiplication and propagation of spawn in the host wood according to the method of the present invention;

Figure 3 is a perspective view showing the conditions of inoculation of the seed basidiospore bed according to the present invention;

Figure 4 is a plan view showing various forms of the seed basidiospore bed to be used in the present invention;

Figure 5 is a side view of the seed basidiospore bed to be used in the present invention;

Figure 6 is a perspective view of the seed basidiospore bed to be used for the present invention partly provided with a coating;

Figure 7 is a perspective view of the wood piece forming a medium for the seed basidiospore bed to be used for the present invention provided with a number of artificial fissures;

Figure 8 is a front view, partly cut away, of a culture container for the culture of a seed basidiospore bed to be used for the present invention;

Figure 9 is a front view, partly cut away, of the culture container according to Figure 8 shown in a disassembled state;

Figure 10 is a front view, partly cut away, of a boring apparatus for the host wood for inoculation to be used for the present invention, shown in abbreviated form;

Figure 11 is a plan view illustrating the conditions of use of the apparatus of Figure 10 , and,

Figure 12 is a front view illustrating the conditions of formation of the slot or recess for inoculation in the host wood using the boring apparatus of the invention.

There now follows a description of the inoculation of the seed basidiospore bed on the host wood according to the present invention.

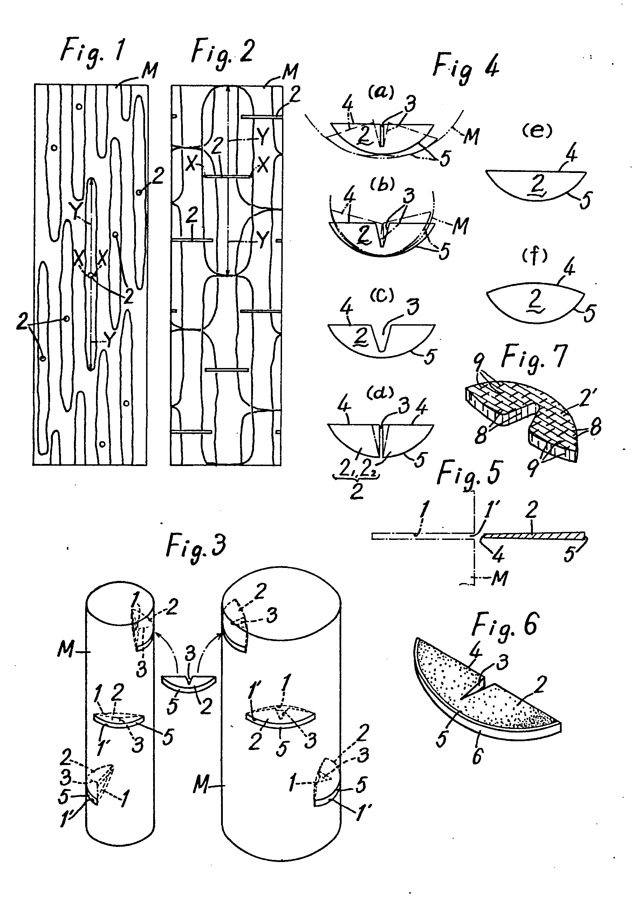

As shown in Figures 1 and 2, the seed basidiospore bed 2 inoculated on the host wood M for inoculation propagates in the lengthwise direction (vertical direction) Y of the wood at a rate of several scores of times faster than that in the breadthwise direction X of the wood. In the present invention, a saw cut is made in the host wood M to a suitable depth in the widthwise direction X thereof, so as to provide an inoculation recess 1 having a transversely long cutout 1' along the outer periphery of the host wood M. Into this inoculation recess 1 a flat, half-moon shaped seed basidiospore bed 2 is placed in a manner so as to close the cut end 1' with the arc-shaped periphery 5 of the seed basidiospore bed 2. The basidiospore inoculated on the host wood M via the seed basidiospore bed 2 multiplies, as shown in Figure 2, over a very broad area in comparison with the conventional method of Figure 1, thus making much use of the characteristics and aptitude to propagate in a lengthwise direction Y as previously described. Accordingly, it is possible to considerably reduce the number of pieces of the seed basidiospore bed 2 to be inoculated compared to the numbers used in the conventional methods, leading to a significant saving of labour and time spent in the inoculation work. Also, according to the present invention, spawn of the inoculated basidiospore spreads evenly and rapidly in the host wood M, so that propagation of foreign bacteria is suppressed, and simultaneously, the period from inoculation to mushroom development is shortened.
Moreover, during cultivation, the mushrooms become
apt to develop simultaneously from the surface of the
host wood , so that it is possible to expect
acceleration of crop time and an increase in yield.

The seed basidiospore bed 2 to be used in the
present invention is made from a piece of wood having a
thickness nearly equal to that of the cut end 1' of the
inoculation recess 1 to be formed as aforementioned
and cut out into a half-moon shape to conform to the
profile of the inoculation recess and the seed
basidiospores are inoculated thereon to make a pure
culture.  Ideally, the seed basidiospore bed 2 should
be buried in the host wood M so as to completely fill
up the recess.  In practice, however, the host wood M
has various diameters and its sectional size is not
constant.  Therefore, it is not always the case that
the seed basidiospore bed 2, which is produced on a
standard basis, matches exactly with the cut end 1'
of the host wood M and conforms to the profile of the
inoculation recess 1.

Accordingly, the present invention has been
designed to optionally provide a notch on the inner
periphery of the seed basidiospore bed 2 which is as a
whole formed in a flat, half-moon shape, by which it is
made possible to alter the size of the seed basidiospore
bed 2 to conform to the size of the inoculation recess
1.

The seed basidiospore bed 2 whose size is variable
is shown in Figure 4.  In the figure, the part 3 is a
notch provided on the seed basidiospore bed 2 from
the mid part of its inner periphery 4 (or the side to
go inside the inoculation recess 1) toward the mid part
of the arc periphery 5 (which is formed to fill up the
cut end 1' of the inoculation recess ).  This notch 3 may be present, as shown in Figure 4 (a), in the form of a small width slit, or, as shown in Figure 4 (b), in the form of an isosceles triangle cutout, or, as shown in Figure 4 (c), in the form of an isosceles triangle cutout with an arc at the top, or, as shown in Figure 4 (d), in the form of a cut right up to the arc periphery 5 , so that the seed basidiospore bed 2 to be set into an inoculation recess 1 effectively comprises a pair of symmetrical pieces $2_1$ and $2_2$. In any of these forms, the individual seed basidiospore bed 2 which has been uniformly produced can be modified as regards its shape by further opening or closing the notch 3 so as to bring it nearer to the size and the shape of the individual inoculation recess 1 which differs according to the size of the diameter of the host wood M to which the bed is applied,(as shown in Figure 3 ).

With respect to the shape of the inoculation recess 1 in the present invention, the width and the height of the cut end 1' are hardly altered by changing the kind of saw to be used, but the shape of the inner profile may vary. For example, when a straight type saw is used, the cut end has a straight line form. However, when a circular saw is used, the cut end has an arc form. Accordingly, the present invention is designed to cover versions of a seed basidiospore bed 2 having a linear inner periphery 4 as shown in Figure 4 (e), and a seed basidiospore bed 2 having a curved inner periphery 4 opposite to the arc periphery 5 as shown in Figure 4 (f). These two kinds of seed basidiospore bed 2 can be selectively used according to the kind of saw to be employed so that the seed basidiospore bed 2 can be exactly set into the inoculation recess 1 without leaving any space.

0166040

Further, as shown in Figure 5, the present invention is designed to facilitate insertion of the seed basidiospore bed 2 into the inoculation recess 1 by tapering its thickness toward the inside edge 4 so that it is slightly thinner there than at the outer edge of the arc side 5. In this case, if the wall of the seed basidiospore bed 2 is uniformly tapered, the arc periphery 5 which is to block the cutout 1' of the inoculation recess 1 leaves spaces at its two ends proportionate to the tapering angle. Therefore, in inserting from the front of the inoculation recess 1, it is desirable to form the seed basidiospore bed 2 as a reversed conical inclined surface in a manner so as to make the mid part of the inner periphery 4, which is received by the cut end 1', the thinnest. At least the product which is formed is in a wedge shape so that the vertical section at the mid part of the seed basidiospore bed 2 is lowered in the direction of advance into the inoculation recess 1 and can attain the object of the present invention. According to the present invention designed as above, in inoculating the basidiospore bed on the host wood M, the thin inner periphery 4 is firstly inserted into the inoculation recess 1, so that the insertion is easily made. Therefore, in inoculating the flat, rather fragile, seed basidiospore bed 2, breakage of the bed 2 is prevented and the work efficiency can be improved.

The present invention is further designed, as shown in Figure 6, to provide a chemical coating or a covering 6 for the prevention of the entry of foreign bacteria or rain water and the effects of drying on the arc periphery 5 of the seed basidiospore bed 2 which is to be exposed on the cut end 1' after the inoculation. This can save the after-treatment work which usually follows the inoculation of the seed basidiospore bed 2. As the arc periphery 5 of the seed basidiospore bed 2 is exposed on the surface of the host wood M blocking the cut end 1' of the inoculation recess 1, foreign bacteria and rain water are apt to come in from the exposed portion, and also the exposed portion gives out water. Accordingly, it is desirable to apply wax or waterproof film onto the exposed portion. However, as such after-treatment work requires extra time, it is often the case that such treatment is omitted, giving rise to one of the causes of defective cultivations. According to the embodiment of the present invention wherein the portion to be exposed is previously provided with a coating or a covering 6 as above, the necessary treatment can be done simultaneously with the planting of the seed basidiospore bed 2. The coating 6 is formed by applying, before culture of the seed basidiospores, an acrylic or urethane or silicon resin either alone or together with from 0.5 to 0.1% of butyl benzoate, thiabendazol or methyl-1-(butylcarbamoyl)-2-benzimidazol carbamate as a mould preventing agent. In a modified embodiment of the present invention, a thin synthetic resin film containing the above component may be applied as a coating.

Further, in the present invention it is possible, as shown in Figure 7, to form a number of artificial fissures 9 on the wood piece 2' (to become the medium for the seed basidiospore bed, before culture of the seed spores) in a direction across the natural grain 8 of said wood piece 2'. This makes it possible to shorten the culture time of the seed basidiospore bed 2 and achieve full ripening more rapidly. Formation of artificial fissures 9 on the wood piece 2' can be carried out by allowing the grain 8 to pass through a rotating roll on which plural circular saws are coaxially mounted in a manner such that the grain 8 crosses the axial line of said roll.

When the wood piece 2' provided artificially with the fissures 9 is inoculated with the seed basidiospores and cultivated, the characteristics of the spores of the kind which are apt to propagate in a vertical direction can be utilized and a shortening of the culture time and an early full ripening can be attained. It is thus possible to offer an excellent seed basidiospore bed 2 which is rich in active deposition property and easy to cultivate.

According to the present invention, the half-moon shaped seed basidiospore bed 2 to be used in the present invention can be readily taken in and out of the culture container, so that the seed basidiospore bed 2 which is apt to be cracked due to its flat shape can be prevented from being damaged. Further, the empty culture containers can be kept in storage without occupying a large space.

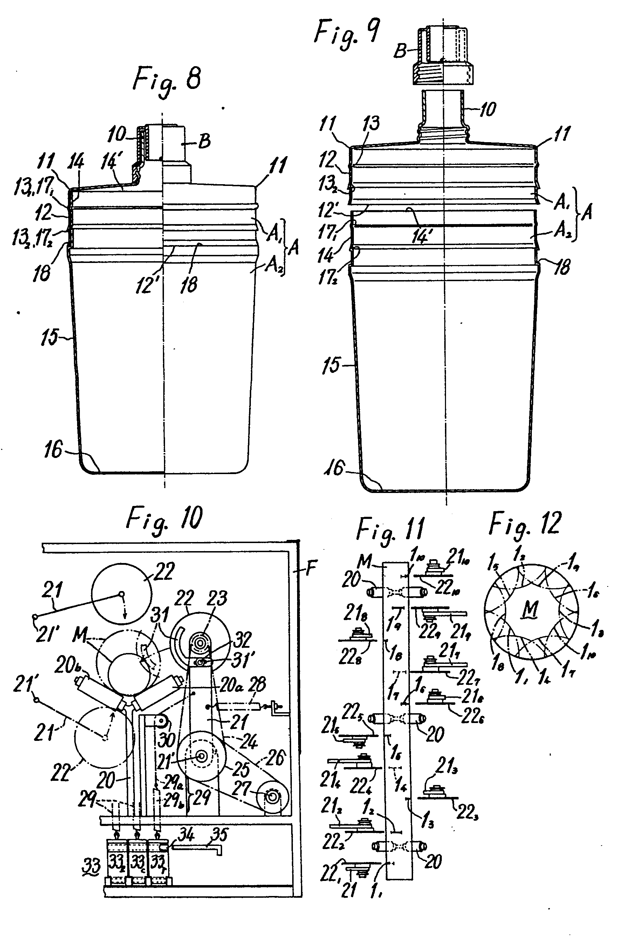

Referring to the culture container A of the present invention, as shown in Figures 8 and 9, a thin walled, hollow synthetic resin culture container body A, having a mouth 10 to accommodate a cap B at its upper end, is divided into the upper and the lower half parts at the lower part of the shoulder 11 of the container A, i.e. into the upper section $A_1$ and the lower section $A_2$ which are mutually readily engageable and separable.

The upper section $A_1$ is furnished with a mouth 10, which is screw threaded at its upper end to a double tube type cap B suitable for plugging with cotton (not shown in the drawing), a shoulder 11 whose circumferential size is enlarged from the lower end of the mouth 10, and a cylindrical coupling part 12 which is continued to the lower section of the shoulder 11 with the same diameter. The coupling part 12 has on its inner circumferential surface concave sectional circumferential grooves $13_1$, $13_2$ forming upper and lower steps. The lower step circumferential groove $13_2$ has a wedge shaped concave section. Also, the lower edge 12' of the coupling part 12 is formed into a slightly outwardly facing edge.

On the other hand, the lower section $A_2$ has an open circular upper edge 14' and at its top end a coupling part 14 which is to be engaged in tight contact with the inner circumferential surface of the coupling part 12. Downward from the coupling part 14, a barrel 15 and a bottom 16 of the container are formed in one-piece. On the outer circumferential surface of the coupling part 14 there are circumferential convex sectional ribs $17_1$, $17_2$ having corresponding shapes respectively to the above circumferential grooves $13_1$ and $13_2$, and, on a part adjacent to the barrel 15, at the lower edge 12' of the coupling part 12, a stopping flange 18 is provided to restrict the coupling depth.

In the container body A for cultivating the seed basidiospore bed constituted as above, there are placed the flat, half-moon shaped wood pieces 2' which are to form the materials for the seed basidiospore bed 2 together with the nutrients suitable for cultivating the mushroom spores, and the coupling part 12 is set into the coupling part 14 until the lower edge 12' of the upper section $A_1$ is stopped by the stopping flange 18 of the lower section $A_2$, by which the circumferential grooves $13_1$, $13_2$ are engaged respectively with the circumferential ribs $17_1$, $17_2$, with the result that the lower section $A_2$ is prevented from slipping out even when the bottle is carried with only its mouth 10 held. Then, through the mouth 10 mushroom spores are inoculated on the above wood piece 2', a cotton-plugged cap B set in, and cultivation is allowed to occur in the culture chamber for a prescribed period of time. The seed basidiospore bed 2 which has completed culture of the seed spores, under the conditions in the container body A, is carried to the place of cultivation where the host wood M for inoculation is available, taken out by removing the upper section $A_1$, and inoculated according to the procedures as aforedescribed.

The culture container of the present invention constituted as above and made usable as described, can be used to store the material wood pieces 2' and to transport the seed basidiospore beds 2 for planting, by largely opening the container. Therefore, it is suitable for containing the flat, fragile seed basidiospore beds and is effective in preventing the beds from being damaged. The container can be safely carried. In keeping the empty containers in stock, the upper and the lower container sections $A_1$ and $A_2$ can be laid in combination respectively to reduce their total volume.

The transverse inoculation recess 1 to be formed in the host wood M for inoculation to be used in the present invention is, according to the present invention, scarcely affected by the size or the bend of the raw wood, and can be mechanically bored almost uniformly and with high efficiency.

There now follows a description of the boring apparatus for the host wood to be inoculated by the present invention with reference to Figures 10, 11 and 12.

In Figure 10, the boring apparatus includes a sterically constructed frame F and a bearing stand 20. The bearing stand 20 comprises three Y-shaped stays 20a erected at certain intervals along the centre line of the frame F and rollers 20b which are accommodated respectively on the upper right and left arms of the stays 20a.

By means of three pairs of rollers 20b which are inclined in a V-shape, the host wood for inoculation M is supported at its front and rear parts and middle part. Plural arms 21, each being supported by the fulcrum shaft 21' provided on the frame F, are freely swingably provided on the transverse direction of the host wood M. Circular saws 22 for cutting into the host wood M transversely are fixed to the tip of each arm 21 in a freely rotatable manner. Each saw 22 is linked via the pulley 23, driving belt 24, pulley 25 provided on the fulcrum 21' of the arm, and the motor rotation shaft 27 for driving the pulley 25 via the driving belt 26 transversally laid on the frame F. Each saw rotates following the motor (not illustrated) which drives the motor rotation shaft 27. Coil springs 28 are provided between the frame F and the respective arms 21. A tracting device 29 exerts a swing motion to each arm 21 resisting the coil spring 28 so as to bring the saw 22 close to the host wood M. This tracting device 29 comprises a wire 29a whose one end is fixed to the arm 21 with its middle part supported by the roller 30, and a coil spring type elastic member 29b connected with the other end of the wire 29a. A cutting limiter 31 restricts the depth of cutting of the saw teeth in contact with the surface of the host wood M in cutting with the saw 22. Each cutting limiter 31 has a slot 31' at its base of fitting to the arm, so that, by sliding this slot 31' along the stopping screw 32, the distance between the limiter 31 and the crest of the saw 22 is changed to adjust the cutting depth of the saw teeth.

In the embodiment as shown in Figure 11, the arms 21 are arranged in a manner so as to surround the bearing stand 20 from all sterical directions, ten in total, each being furnished with a coil spring, a saw, a tracting device, and a cutting limiter. As illustrated in Figure 10, the lower end of the tracting device 29 (coil spring type elastic member 29b) is fixed to either of the three unit pedals with its lower end projected to the front lower part of the frame F. On depressing the pedal 33 shown on the right side of Figure 10, the arms $21_3$, $21_6$ and $21_{10}$ positioned on the right side in Figure 11 are tracted. When the central pedal $33_c$ is depressed, likewise the other arms $21_7$ and $21_9$ on the right side and the arms $21_2$ and $21_4$ on the left side are tracted, while on the other hand, when the left side pedal $33_1$ is depressed, likewise the other left side arms $21_1$, $21_5$ and $21_8$ are tracted. Each arm 21 is connected respectively to a single pedal 33, being divided into three directions of right side, top-bottom and left side, according to the direction of access to the host wood M. Also, each pedal $33_r$, $_c$ and $_1$ is provided on the reverse surface at the foremost end as shown in Figure 10, with a through hole 34 in a common position, and, by thrusting a single rod 35 therethrough which is freely detachably engaged therewith, the above-mentioned ten arms 21 are simultaneously tracted.

The above ten arms $21_{1-10}$ have, as shown in Figure 10, their fulcrum positions and lengths suitably chosen and, as shown in Figure 11, they are suitably arranged at nearly equal distances along the length of the host wood M. The saws $22_{1-10}$ at the tip of each arm $21_{1-10}$ are, as shown in Figure 12, so provided as to make it possible to cut at nearly an equal angle to each other into the circumference of the host wood M. Also, the saws $22_{1-10}$ are so provided that the cutting position of the inoculation recesses $1_{1-10}$ to be formed in a transverse direction of the surface of the host wood are to be arranged on nearly two round spiral lines.

In Figure 11, the portion shown in the unbroken line of the inoculation recesses $1_{1-10}$ is that visible from above. The portion shown in the broken line represents the portion to be formed on the reverse side. The short lines at both ends are to show the approximate length of the recess.

The aforementioned motor rotation shafts 27 for driving the saws 22 are two parallel horizontal units along both sides of the bearing stand 20, having mutually a relation of conveying motive power. One shaft is connected with an output shaft of a motor or an engine.

In using the present boring apparatus constituted as above, the tracting device 29 is activated to bring the arm 21 close to the host wood M supported by the bearing stand 20. Then the saw 22, driven by the motor rotation shaft 27, cuts into the host wood M in a transverse direction. The cutting depth is determined in such manner that the cutting limiter 31, together with the saw 22, having an access to and in contact with the surface of the host wood M, fixes the angle of the arm 21. The traction force which works beyond it is absorbed by an elongation of the elastic member 29b which is attached to the tracting device 29. Accordingly, both in the case of individually tracting the arm 21 and in the case of simultaneously tracting the arm 21 to form the inoculation recesses $1_{1-10}$, the cutting depth, i.e. the depth of the inoculation recess, can be formed at a nearly constant rate. Also, even in the case of there being some differences in the diameters or the existence of bends in the host wood M for inoculation, the inoculation recesses are formed at the prescribed positions with nearly a fixed depth.

As described above, according to the present invention,even in case of the differences in coarseness or inclusion or not of bends in the host wood for inoculation, the inoculation recess 1 to be provided can be mechanically formed to a suitable depth. Also, according to the present invention, it is possible to keep a piece of host wood for inoculation placed at a fixed position, in which various inoculation recesses 1 can be provided at a certain interval from one another and from diversified directions. Moreover, according to the present invention, plural inoculation recesses 1 can be provided simultaneously in the same direction on a single host wood M by means of a single pedal operation.

Further, according to the present invention, it is possible to form at one time the prescribed number of inoculation recesses 1 on the surface of a piece of host wood M for inoculation at a certain distance and in a spiral arrangement around the host wood. Furthermore, according to the present invention, by changing the setting position of the cutting limiter 31, the depth of the inoculation recess 1 can be adjusted according to the size of the host wood M for inoculation.

CLAIMS

1.     A method of inoculating basidiospores of mushroooms, particularly Lentinus edodes, which comprises making one or more saw cuts in the surface of a piece of host wood to a suitable depth in a transverse direction of said host wood so as to form one or more transverse recesses for inoculation along the outer periphery of the host wood and inserting therein a flat, half-moon shaped seed basidiospore bed in a manner such as to fill said recess.

2.     A seed basidiospore bed to be used in the method of inoculation according to Claim 1, wherein the seed basidiospore bed made by inoculation of a pure culture of the seed basidiospores comprises  a flat, half-moon shaped piece of wood having nearly the same shape as and an equal thickness to the cutout profile of the open end of said recess for inoculation.

3.     The seed basidiospore bed according to Claim 2, wherein said seed basidiospore bed is provided with a notch extending to an appropriate depth from the mid part of the side which is to meet the inner edge of said recess for inoculation toward the mid part of the opposite arc side.

4.     The seed basidiospore bed according to Claim 3, wherein said notch is in the form of an isosceles triangle having an appropriate bottom side length.

5.     The seed basidiospore bed according to Claim 4, wherein said notch has an arc at the top of the isosceles triangle.

6.     The seed basidiospore bed according to Claim 3, wherein said notch extends fully to the middle part of said arc side, so that the seed basidiospore bed to be set into the recess for inoculation comprises a pair of right and left side pieces.

7.  The seed basidiospore bed according to Claim 2, wherein the side of the seed basidiospore bed opposite the arc side is formed in a straight line, said bed being as a whole formed in a flat comb-like shape in plan view.

8.  The seed basidiospore bed according to Claim 2, wherein the middle part of one side has an outwardly curved form opposite to the arc side.

9.  The seed basidiospore bed according to any of claims 2 to 8, wherein said arc side has a thickness nearly equal to the cutout of said recess for inoculation, the opposite side has a thickness thinner than that of said arc side, and at least the vertical sectional surface passing through the mid part of the two sides is inclined in a wedge shape so as to become lower along the direction of entry into said recess for inoculation.

10. The seed basidiospore bed according to any of Claims 2 to 9, wherein the arc side of said seed basidiospore bed which is to fill the recess for inoculation by application to the host wood has been previously provided with a coating or a covering of a composition for preventing foreign bacteria or rainwater from entering after the inoculation and preventing the seed basidiospore bed from being dried out by water loss.

11. The seed basidiospore bed according to any of Claims 2 to 10, wherein said bed has on its flat surface a number of artificial fissures running in a direction so as to intersect the natural grains of the wood.

12. A container for the culture of the seed basidiospore bed according to any of Claims 2 to 11, which comprises a thin-walled hollow cylindrical container body having a mouth for accommodating a cap at the top, said container body being separable into upper and lower sections, the upper section including a mouth and a shoulder part, said upper section having a cylindrical form with its diameter equal to that of the container body and its circular lower end open, including on the inner edge of the cylindrical coupling part a concave sectional circumferential groove, and said lower section having a cylindrical form with its circular upper end open, including on the outer edge of the cylindrical coupling part a convex sectional circumferential rib to engage with said circumferential groove, a barrel and a bottom of the container body being formed in one-piece with the underside of said coupling part of the lower section.

13. The culture container for the seed basidiospore bed according to Claim 12, wherein more than one set of said circumferential grooves and circumferential ribs are formed on the upper and the lower sections respectively on said coupling parts and one set thereof is formed in convex and concave wedge shapes in section respectively so as to act as a stopper between the female coupling part and the male coupling part.

14. The culture container for the seed basidiospore bed according to Claim 13, wherein there is provided a stopping flange which limits the maximum coupling depth between said upper and lower sections of the container, the lower edge of said coupling part in contact with said stopping flange being formed into an open edge which is slightly wider and inclined outwards.

15.    A boring apparatus for host wood for inoculation to be used in the method of inoculating seed basidiospore beds according to Claim 1, comprising a bearing stand (20) for supporting the host wood (M), a swingable arm (21) able to swing in a transverse direction of the host wood supported by said bearing stand, said arm being provided with a coil spring (28), a saw (22) for cutting into the host wood on the bearing stand in a transverse direction, a tracting device (29) provided with an elastic member for directing said arm toward the host wood and tracting it against said coil spring, and a cutting limiter (31) which restricts the depth of cutting achieved with said saw.

16.    The boring apparatus for host wood for inoculation according to Claim 15, wherein plural arms (21) each having said coil spring (28), saw (22) and tracting device (29) and furnished with an elastic member and a cutting limiter (31) are provided at regular intervals along the length of the host wood supported by said bearing stand, and the arms are arranged around said bearing stand along the circumference of the host wood so that the saws on each arm approach at approximately the same angle as one another.

17.    The boring apparatus for host wood for inoculation according to Claim 16, wherein the respective tracting devices (29) provided on said plural arms (21) are each connected with a pedal (33).

18.    The boring apparatus for host wood for inoculation according to Claim 17, wherein said pedals (33) with which plural tracting devices (29) are respectively linked are connected in series by a single connecting rod (35) which is to be accommodated in freely disengageable manner in a common position, so that more than one pedal may be simultaneously operated.

0166040

19.     The boring apparatus for host wood for inoculation according to Claim 16, wherein said plural arms (21) are arranged around said bearing stand (20) at regular intervals along the length of the host wood and in such a manner that the respective saws (22) are arranged around the circumference of the host wood at approximately the same angle to each other, and the cutting positions of said saws are arranged on a spiral locus to the centre of the host wood.

20.     The boring apparatus for host wood for inoculation according to Claim 15, wherein said cutting limiter (31) is fitted to said arm (21) in such a manner that advance and retraction in the direction of cutting of the saw (22) is adjustable by means of a slot (31') and a stopping screw (32).

**Fig. 1**

**Fig. 2**

**Fig 4**

(a)

(b)

(c)

(d)

(e)

(f)

**Fig. 7**

**Fig. 5**

**Fig. 3**

**Fig. 6**

*Fig. 8*

*Fig. 9*

*Fig. 10*

*Fig. 11*

*Fig. 12*

0166040

2/2

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| A | FR-A-2 352 487 (KAO SOAP)<br>* Page 1, line 6 - page 2, line 33 * | 1 | A 01 G 1/04 |
| A | FR-A-2 038 473 (SOCIETE BLANCS DE SEMIS LE LION)<br>* Page 2, lines 21-40; figures 1-4 * | 12 | |
| A | US-A-4 291 492 (REYNOLDS)<br>* Column 2, line 51 - column 4, line 62; figures 1-4 * | 15 | |

----- 

|  |  | TECHNICAL FIELDS SEARCHED (Int. Cl.4) |
|---|---|---|
|  |  | A 01 G |

The present search report has been drawn up for all claims

| Place of search | Date of completion of the search | Examiner |
|---|---|---|
| THE HAGUE | 14-02-1985 | HERYGERS J.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82